# EUROPÄISCHE PATENTSCHRIFT

(11) **EP 3 737 555 B1**
(45) Veröffentlichungstag und Bekanntmachung des Hinweises auf die Patenterteilung: **14.02.2024**
(21) Anmeldenummer: 19711588.4
(22) Anmeldetag: 15.03.2019
(51) Int. Cl.: B30B 11/00, B30B 11/08, B30B 15/30

(54) **BEFÜLLEINHEIT UND VERFAHREN ZUM BEFÜLLEN VON KAVITÄTEN EINER TABLETTENPRESSE MIT EINEM ZU VERPRESSENDEM FÜLLMATERIAL SOWIE MODUL ZUR HERSTELLUNG VON TABLETTEN**
FILLING UNIT AND METHOD FOR FILLING CAVITIES IN A TABLET PRESS WITH A FEEDSTOCK TO BE PRESSED AND MODULE FOR PRODUCING TABLETS
UNITÉ DE REMPLISSAGE ET PROCÉDÉ SERVANT À REMPLIR DES CAVITÉS D'UNE PRESSE À COMPRIMÉS D'UN MATÉRIAU DE REMPLISSAGE À COMPRESSER, AINSI QUE MODE DE FABRICATION DE COMPRIMÉS

(30) Priorität: 22.03.2018 DE 102018204440
(43) Veröffentlichungstag der Anmeldung: 18.11.2020
(73) Patentinhaber: Glatt Maschinen- und Apparatebau AG, 4133 Pratteln (CH)
(72) Erfinder: NOWAK, Reinhard, 79540 Lörrach (DE); THIES, Jochen, 79540 Lörrach (DE)
(74) Vertreter: Patentanwälte Magenbauer & Kollegen Partnerschaft mbB
(86) Internationale Anmeldenummer: PCT/EP2019/056585
(87) Internationale Veröffentlichungsnummer: WO 2019/179896

(56) Entgegenhaltungen:
- WO-A1-2014/207510
- DE-A1- 4 437 823
- DE-C- 818 450
- JP-A- S4 837 371
- US-A1- 2014 234 463
- US-A1- 2017 282 421

## Beschreibung

Kavitäten einer Tablettenpresse mit zu verpressendem Füllmaterial, insbesondere einem Pulver, mit einer eine Füllkammer aufweisenden Fülleinrichtung, wobei die Füllkammer im Einbauzustand zwischen einem die Kavitäten aufweisenden Matrizentisch und einem mindestens einen Stempel aufweisenden Stempelträger angeordnet ist, und wobei die Füllkammer mindestens eine Einlassöffnung zur Befüllung der Füllkammer mit Ausgangsstoffen und mindestens eine Auslassöffnung zur Befüllung der Kavitäten der Tablettenpresse mit zu verpressendem Füllmaterial aufweist.

Des Weiteren betrifft die Erfindung ein Verfahren zum Befüllen von Kavitäten einer Tablettenpresse mit zu verpressendem Füllmaterial, insbesondere einem Pulver, mit einer Befülleinheit gemäß einem der Ansprüche 5 bis 10.

Zudem betrifft die Erfindung ein Modul zum Herstellen von Tabletten umfassend eine Tablettenpresse, einen stromab der Tablettenpresse positionierten Sensor, der geeignet ist die in der Tablettenpresse hergestellten Tabletten zu analysieren, und eine Steuereinheit.

Eine Tablette ist eine der gebräuchlichsten Darreichungsformen für pharmazeutisch aktive Wirkstoffe (API). Die Tablette besteht in der Regel aus einer Mischung mehrerer Ausgangsstoffe, die als Pulver, vorzugsweise als Pulvermischung, vorliegen, nämlich den pharmazeutisch aktiven Wirkstoffen und Hilfsstoffen, den so genannten Exzipienten. Bei der Tablettenherstellung ist es von entscheidender Wichtigkeit, dass die vorgenannten Pulver optimal vermischt sind, weil nur auf diese Weise gewährleistet werden kann, dass in jeder Tablette die vorgesehene Dosis an pharmazeutisch aktiven Wirkstoff (API) und an Hilfsstoffen vorliegt.

Gemäß dem Stand der Technik ist es bekannt, dass die für die Tablettenherstellung notwendige gute Mischung durch eine Granulation erreicht werden kann, wobei die Granulation energetisch und zeitlich aufwändig und daher unerwünscht ist. Zudem wird der größte Anteil an Tabletten derzeit nicht aus Granulaten, sondern aus vorzugsweise pulverförmigen Füllmaterial direkt hergestellt.

Die deutsche Patentanmeldung DE 2 157 465 A betrifft eine hydraulische Blockpresse zur Verdichtung pulverförmiger oder faseriger Materialien unter Vakuum mit zumindest zwei um eine gemeinsame Achse schwenkbaren als Füll- bzw. Presskammer dienenden Pressbehälter und einer Füllvorrichtung, sowie mit in die Presskammer eintauchbarem Verdichtungskolben und einer dieser koaxial zugeordneten Evakuierungseinrichtung. Die Füllvorrichtung ist hierbei aus einem der Füllkammer in Achsrichtung vertikal vorgeordneten feststehenden Füllrohr gebildet, dem konzentrisch ein mittels eines Druckzylinders teleskopartig bewegliches Füllrohr zugeordnet ist. Das Einfüllen des Füllgutes geht ohne Lufteinschluß vonstatten, indem durch Absenken des Pressstempels das Füllgut unter gleichzeitiger Schwerkrafteinwirkung in die Füllkammer saugend eingelagert wird.

Der Nachteil an der schwerkraftbedingten Förderung des Füllgutes in die Presskammer der hydraulischen Blockpresse ist, dass hierdurch Entmischungen und Segregation des Füllgutes möglich sind.

Des Weiteren offenbart die europäische Patentanmeldung EP 3 260 286 A1 eine Fülleinrichtung zum Befüllen von Kavitäten einer Rundläuferpresse, umfassend ein Füllmaterialreservoir und eine mit dem Füllmaterialreservoir in Verbindung stehende Füllkammer mit einer Befüllöffnung, aus der Füllmaterial in die Kavitäten der Rundläuferpresse gelangen kann, wobei in der Füllkammer ein erstes drehend angetriebenes Rührflügelrad mit Rührflügeln und ein zweites drehend angetriebenes Rührflügelrad mit Rührflügeln angeordnet sind, wobei sich erstes und zweites Rührflügelrad hinsichtlich ihrer Geometrie und/oder ihrer Drehrichtung und/oder ihrer Drehgeschwindigkeit unterscheiden. Über einen mit der Füllkammer in Verbindung stehenden Zuführabschnitt wird pulverförmiges Füllmaterial aus dem Füllmaterialreservoir schwerkraftbedingt in die Füllkammer und aus dieser über eine an der Unterseite der Füllkammer vorgesehene Befüllöffnung wiederum schwerkraftbedingt in die Kavitäten des Matrizentisches gefüllt.

Nachteilig an der vorgenannten Fülleinrichtung ist, dass es bei pulverförmigen Füllmaterial, insbesondere bei Pulvermischungen, durch den schwerkraftbedingten Transport des Füllmaterials in die Kavitäten der Rundläufertablettenpresse ebenfalls zu Entmischungen und zu Segregation der Ausgangsstoffe des zu verpressenden Füllmaterials kommen kann. Auch eine Auflockerung des pulverförmigen Füllmaterials vor dem Befüllen der Kavitäten des Matrizentisches der Rundläufertablettenpresse führt nicht zu einer optimalen Mischung des zu verpressenden Füllmaterials.

Die US 2014/234463 A1 offenbart eine Befülleinheit zum Befüllen von Kavitäten einer Tablettenpresse mit zu verpressendem Füllmaterial, gemäß dem Oberbegriff des Anspruchs 1, mehr insbesondere offenbart sie eine redundante Befüllvorrichtung für eine Rundläufertablettenpresse, wobei die Befüllvorrichtung u. a. eine Pulvermischeinheit und eine Pulverbeschickungseinheit umfasst. Die Pulvermischeinheit weist eine Mischvorrichtung auf. Die Pulverbeschickungseinheit befüllt die Kavitäten der Rundläufertablettenpresse und kann mit der Pulvermischeinheit ganzheitlich ausgebildet werden.

In der US 2017/282421 A1 wird eine "konventionelle" Tablettenpresse mit vorgeschalteter Befüllvorrichtung gezeigt, wobei Pulverbeschickungseinheit und Pulvermischeinheit räumlich voneinander getrennt sind.

Aufgabe der Erfindung ist es eine Befülleinheit und ein Verfahren zum Befüllen von Kavitäten eines Matrizentisches einer Tablettenpresse mit Füllmaterial sowie ein Modul zum Herstellen von Tabletten bereitzustellen, wobei Entmischungs- und Segregationseffekte der Ausgangsstoffe des Füllmaterials durch den schwerkraftbedingten Transport des Füllmaterials, bspw. in vertikalen Zuführungsleitungen, in die Kavitäten des Matrizentisches der Tablettenpresse zumindest reduziert, bevorzugt sogar vermieden werden.

Diese Aufgabe wird bei einer Befülleinheit der eingangs genannten Art durch die Kombination der Merkmale des Anspruchs 1 gelöst.

Der Vorteil der erfindungsgemä-ßen Befülleinheit ist darin zu sehen, dass das zu verpressende Füllmaterial stets optimal vermischt, d. h. eine Entmischung und/oder Segregation des zu verpressenden Füllmaterials wird zumindest deutlich reduziert oder ganz vermieden, an der zur Befüllung der Kavitäten des Matrizentisches der Tablettenpresse vorgesehenen Fördereinrichtung bereitgestellt wird. Zusätzlich werden aufgrund einer solchen Ausgestaltung der Befülleinheit zum einen die Investitionskosten gesenkt und zum anderen kann die Befülleinheit direkt im Bereich der Tablettenpresse angeordnet sein. Zudem wird hierdurch eine sehr platzsparende Befülleinheit für eine Tablettenpresse geschaffen.

Bevorzugt weist die Fülleinrichtung, insbesondere die Füllkammer, eine weitere Einlassöffnung zur Zuführung von Trenn- und/oder Schmiermittel auf. Nahezu alle tablettierfähigen Füllmaterialien, insbesondere Pulvermischungen, erfordern in Batch- oder kontinuierlichen Prozessen einen zumindest geringen Anteil an Trenn- und/oder Schmiermitteln, wie beispielsweise Magnesiumstearat. Die Trenn- und/oder Schmiermittel liegen in der Größenordnung von 0,5 % bis 1 % des in die Kavitäten des Matrizentisches der Tablettenpresse zu füllenden Füllmaterials. Die Trenn- und/oder Schmiermittel sorgen dafür, dass eine Tablette nach einem Pressvorgang wieder zerstörungsfrei aus dem Presswerkzeug ausgestoßen werden kann. Die Trenn- und/oder Schmiermittel sollten bevorzugt als letzter Ausgangsstoff für das Füllmaterial zugemischt werden. Zudem sollten die Trenn- und/oder Schmiermittel gleichmäßig im Füllmaterial, insbesondere einer Pulvermischung, verteilt sein. Eine zu intensive, d. h. zu lange Einarbeitung der Trenn- und/oder Schmiermittel sollte verhindert werden, weil die Trenn- und/oder Schmiermittel die Ausgangsstoffe des Füllmaterials, insbesondere einer Pulvermischung, untereinander trennt und daher einer Tablettierung im Wege steht. Bevorzugterweise sollte für eine Zugabe der Trenn- und/oder Schmiermittel daher eine weitere Einlassöffnung im Bereich der Mischeinrichtung, ganz bevorzugt am Ende der Mischeinrichtung, vorgesehen werden, so dass für die Trenn- und/oder Schmiermittel eine kurze Verweilzeit im Bereich der Mischeinrichtung bei gleichzeitig optimaler Vermischung mit den Ausgangsstoffen des Füllmaterials sichergestellt wird.

Zudem weist die Fülleinrichtung, insbesondere die Füllkammer, bevorzugt mindestens einen Sensor auf. Ganz besonders bevorzugt ist der mindestens eine Sensor als Füllstandssensor oder als analytischer Sensor, insbesondere zur Messung der Zusammensatzung und/oder Mischgüte des zu verpressenden Füllmaterials, ausgebildet und in der Füllkammer angeordnet. In einer bevorzugten Ausführungsform ist der mindestens eine Sensor als Füllstandssensor ausgebildet, so dass jederzeit eine konstante Menge an zu verpressenden Füllmaterial in der Füllkammer vorhanden ist. Mittels des in der Füllkammer angeordneten Füllstandssensors werden der Füllkammer über Zuführungsleitungen, wie Rohrleitungen oder Schlauchleitungen oder dergleichen, aus Vorratsbehältern die notwendigen Mengen des jeweiligen Ausgangsstoffes zugeführt. In einer ebenfalls bevorzugten Ausführungsform ist der mindestens eine Sensor als analytischer Sensor, insbesondere zur Messung der Zusammensetzung und/oder der Mischgüte des zu verpressenden Füllmaterials ausgebildet. Durch einen derartigen Sensor wird stets eine für den Tablettierungsprozess optimale Zusammensetzung und/oder Mischgüte des zu verpressenden Füllmaterials erzielt. Entsprechend einer ganz besonders bevorzugten Ausführungsform weist die Fülleinrichtung, insbesondere die Füllkammer, zwei Sensoren, nämlich einen Füllstandssensor und einen analytischen Sensor, auf, wodurch die zuvor genannten Vorteile der beiden einzelnen Sensoren gleichermaßen zum Tragen kommen.

Nach einer zusätzlichen vorteilhaften Ausgestaltung der erfindungsgemäßen Befülleinheit ist eine Mischvorrichtung in der Mischeinrichtung angeordnet. Die Mischvorrichtung sorgt für eine sehr gute Vermischung der der Mischeinrichtung zugeführten Ausgangsstoffe in zu verpressendes Füllmaterial, das in Kavitäten des Matrizentisches der Tablettenpresse befüllt wird. Besonders bevorzugt ist die Mischvorrichtung der Mischeinrichtung als Schneckenmischer, als Bandwendelmischer oder als Schaufelmischer ausgebildet. Aufgrund der besonders bevorzugten Ausgestaltung der Mischvorrichtung als Schneckenmischer, als Bandwendelmischer oder auch als Schaufelmischer ist zu jeder Zeit des Gesamtprozesses, insbesondere aber des Mischvorgangs, eine optimale Vermischung der Ausgangsstoffe des zu verpressenden Füllmaterial sichergestellt. Bevorzugterweise wird oder ist die Mischvorrichtung von einer Antriebseinheit, bevorzugt von einem Motor, ganz besonders bevorzugt von einem Elektromotor, noch bevorzugter von einem Servo- oder Torquemotor, angetrieben oder antreibbar. Darüber hinaus bevorzugt wird oder ist die Fördereinrichtung von einer weiteren Antriebseinheit, bevorzugt von einem Motor, ganz besonders bevorzugt von einem Elektromotor, noch bevorzugter von einem Servo- oder Torquemotor, angetrieben oder antreibbar. Darüber hinaus ganz besonders bevorzugt werden oder sind die Mischvorrichtung und die Fördereinrichtung von einer gemeinsamen Antriebseinheit, bevorzugt von einem Motor, ganz besonders bevorzugt von einem Elektromotor, noch bevorzugter von einem Servo- oder Torquemotor, angetrieben oder antreibbar. Vorteilhafterweise können sowohl die Mischvorrichtung als auch die Fördereinrichtung perfekt aufeinander abgestimmt werden, so dass von der Mischvorrichtung ausschließlich die zur Befüllung der Kavitäten der Tablettenpresse durch die Fördereinrichtung optimal durchmischte, notwendige Menge an zu verpressendem Füllmaterial bereitgestellt wird.

Erfindungsgemäß liegen die Fördereinrichtung zur Befüllung der Kavitäten der Tablettenpresse mit zu verpressendem Füllmaterial und die Mischeinrichtung zum Mischen der Ausgangsstoffe in einer horizontalen Ebene. Vorteilhafterweise weist so die Füllkammer der Fülleinrichtung der Befülleinheit keine vertikale Transportstrecke auf. Das zu verpressende Füllmaterial wird daher keinem schwerkraftbedingten Transport unterworfen. Zudem ist die Füllkammer der Fülleinrichtung der Befülleinheit bevorzugterweise in ihrer Gesamtheit zwischen einem die Kavitäten aufweisenden Matrizentisch und einem mindestens einen Stempel aufweisenden Stempelträger anordenbar. Hierdurch wird eine sehr kompakte und kleine Bauweise der Füllkammer erzielt.

Nach einer zusätzlichen vorteilhaften Ausgestaltung der erfindungsgemäßen Befülleinheit sind die mindestens eine Fördereinrichtung zur Befüllung der Kavitäten der Tablettenpresse mit zu verpressendem Füllmaterial und die mindestens eine Mischeinrichtung zum Mischen der Ausgangsstoffe als bauliche Einheit ausgebildet. Als bauliche Einheit wird hierbei bezeichnet, wenn Fördereinrichtung und Mischvorrichtung der Mischeinrichtung ein einziges Bauteil bilden. Durch eine derartige Ausgestaltung wird eine sehr kompakte, platzsparende Baugröße der kombinierten Misch-/Fördereinrichtung erreicht. Darüber hinaus werden durch eine solche kombinierte Misch-/Fördereinrichtung die Investitionskosten gesenkt.

Zudem wird diese Aufgabe bei einem Verfahren der eingangs genannten Art dadurch gelöst, dass zuerst eine Füllkammer mit Ausgangsstoffen befüllt wird, die Ausgangsstoffe mittels einer Mischvorrichtung zum zu verpressenden Füllmaterial durchmischt werden und anschließend in Kavitäten eines Matrizentisches mittels einer Fördereinrichtung mit dem zu verpressenden Füllmaterial befüllt werden. Das erfindungsgemäße Verfahren hat den Vorteil, dass das zur Befüllung der Kavitäten des Matrizentisches der Tablettenpresse das Füllmaterial stets optimal durchmischt ist, wodurch in jeder hergestellten Tablette immer die richtige Dosis an pharmazeutisch aktiven Wirkstoffen, Hilfsstoffen und Trenn- und/oder Schmiermitteln beinhaltet ist. Die richtige Dosierung ist für die Tablettenherstellung von größter Wichtigkeit, denn durch eine zu hohe Dosierung können bei einem die Tabletten einnehmenden Patienten bspw. Vergiftungserscheinungen oder dergleichen auftreten bei einer zu niedrigen Dosierung entfaltet der pharmazeutisch aktive Wirkstoff nicht seine eigentliche Wirkung.

In einer besonders bevorzugten Verfahrensvariante werden mit und/oder nach der Zufuhr der Ausgangsstoffe in die Füllkammer und vor dem Befüllen der Kavitäten des Matrizentisches die Trenn- und/oder Schmiermittel zudosiert. Hierdurch werden die wichtigen Trenn- und/oder Schmiermittel den Ausgangsstoffen optimal beigemischt ohne, dass sie eine entmischende Wirkung entfalten können.

Ganz besonders bevorzugt messen die in der Füllkammer angeordneten Sensoren kontinuierlich. Der Vorteil einer kontinuierlichen Messung ist, dass zu jedem Zeitpunkt der Verweilzeit des Füllmaterials in der Füllkammer der erfindungsgemä-ßen Befülleinheit die Prozessbedingungen erfasst werden und somit direkt Einfluss auf den Prozess, bspw. durch Zugabe der für eine optimale Pulvermischung notwendigen Ausgangsstoffe, genommen werden kann.

Die Aufgabe bei einem Modul der eingangs genannten Art dadurch gelöst, dass das Modul mindestens eine stromauf der Tablettenpresse angeordnete Modulkomponente aufweist, wobei eine Modulkomponente als Befülleinheit gemäß einem der Ansprüche 1 bis 11 ausgebildet ist, die Steuereinheit zum Versenden und Empfangen von Signalen zumindest mit einer Modulkomponente und dem Sensor verbunden ist und die Steuereinheit mittels der vom Sensor erhaltenen Signale geeignet ist, mindestens eine stromauf der Tablettenpresse angeordnete Modulkomponente zu steuern und/oder zu regeln. Ein solches Modul weist den Vorteil auf, dass aufgrund der Rückkopplung durch den nach der Tablettenpresse angeordneten Sensor die Vorlaufzeiten deutlich reduziert werden können, sodass ein Wegfallen der zu entsorgenden Tabletten möglich wird.

Nachfolgend wird die Erfindung anhand der beiliegenden Zeichnung näher erläutert. In dieser zeigen:
- Figur 1: eine schematische Darstellung eines Moduls mit einer Befülleinheit zur kontinuierlichen Tablettenproduktion mit einer herkömmlichen Tablettenpresse gemäß dem Stand der Technik,
- Figur 2: eine schematische Darstellung eines Moduls mit einer erfindungsgemäßen Befülleinheit zur kontinuierlichen Tablettenproduktion mit einer herkömmlichen Tablettenpresse,
- Figur 3: eine schematische Darstellung einer zwischen einem Kavitäten aufweisenden Matrizentisch und einem Stempelträger angeordneten erfindungsgemäßen Befülleinheit Und
- Figur 4: ein Grundfließbild eines Moduls zum Herstellen von Tabletten.

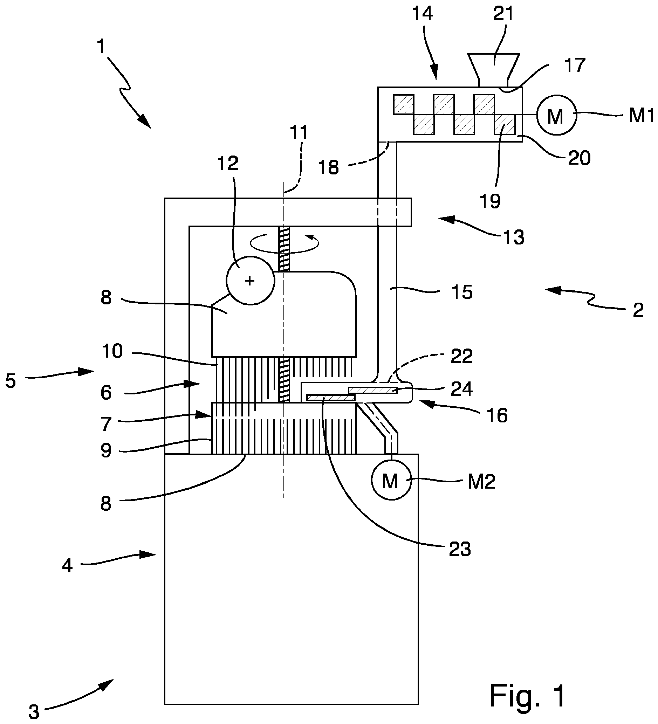

In Fig. 1 ist eine stark schematisierte Darstellung eines Moduls 1 mit einer Befülleinheit 2 zur kontinuierlichen Tablettenproduktion mit einer herkömmlichen Tablettenpresse 3 gemäß dem Stand der Technik gezeigt.

Die Tablettenpresse 3 weist einen Unterbau 4 und einen Aufbau 5 auf. Der Unterbau 4 umfasst unter anderem beispielsweise die gesamte Steuerungseinheit der Tablettenpresse 3 sowie weitere für den Betrieb der Tablettenpresse 3 notwendigen Ausrüstungsgegenstände. Der Aufbau 5 der Tablettenpresse 3 umfasst unter anderem einen Rotor 6, der einen Matrizentisch 7 mit darin - hier nicht dargestellten - Kavitäten aufweist. Zudem umfasst der Rotor 6 mindestens einen eine Führungskurve aufweisenden Stempelträger 8, der Unterstempel 9 und Oberstempel 10 aufweist, wobei die Unterstempel 9 und Oberstempel 10 den Kavitäten des Matrizentisches der Tablettenpresse 3 jeweils zugeordnet sind. Der den Matrizentisch 7 und den mindestens einen Stempelträger 8 aufweisende Rotor 6 ist drehbar um eine Achse 11 angeordnet, wobei der Rotor 6 über eine hier nicht dargestellte Antriebseinheit, die bspw. im Unterbau 4 verbaut ist, rotiert wird. Zusätzlich sind dem Rotor 6 darüber hinaus zumindest teilweise dargestellte Druckrollen 12 zugeordnet, die die Unterstempel 9 bzw. die Oberstempel 10 gemäß ihrer Führungskurve steuern und dadurch das in den Kavitäten des Matrizentisches 7 der Tablettenpresse 3 enthaltene zu verpressende Füllmaterial zu Tabletten pressen.

Damit in der Tablettenpresse 3 Tabletten aus zu verpressendem Füllmaterial gepresst werden können ist es notwendig, dass die hier nicht dargestellten Kavitäten des Matrizentisches 7 mit dem zu verpressenden Füllmaterial befüllt werden. Hierzu weist das Modul 1 eine Befülleinheit 2 auf.

Die Befülleinheit 2 umfasst eine Fülleinrichtung 13 mit einer Mischeinrichtung 14, einer vertikal angeordneten Verbindungsleitung 15 sowie einer Füllkammer 16.

Die Mischeinrichtung 14 ist oberhalb der Tablettenpresse 3 und außerhalb des Aufbaus 5 der Tablettenpresse 3 angeordnet. Zudem weist die Mischeinrichtung 14 neben einer Einlassöffnung 17 und einer Auslassöffnung 18 eine eine Mischvorrichtung 19 umfassende Mischkammer 20 auf. Die in der Mischkammer 20 angeordnete Mischvorrichtung 19 wird über eine erste Antriebseinheit M1 angetrieben. Die zu vermischenden Ausgangsstoffe werden der Mischkammer 20 der Mischeinrichtung 14 über Zuführungsleitungen 21 zugeführt. Die der Mischeinrichtung 14 über Zuführungsleitungen 21 zugeführten Ausgangsstoffe werden in der Mischkammer 20 durch die Mischvorrichtung 19 miteinander zum zu verpressenden Füllmaterial vermischt und verlassen die Mischkammer 20 der Mischeinrichtung 14 über die Auslassöffnung 18 der Mischeinrichtung 14.

Das über die Auslassöffnung 18 der Mischeinrichtung 14 die Mischkammer 20 verlassende Füllmaterial wird der Füllkammer 16 über eine zumindest teilweise vertikale Verbindungsleitung 15 zugeführt. Hierdurch gelangt das zu verpressende Füllmaterial über eine Fallstrecke in die Füllkammer 16, wobei es in der Verbindungsleitung 15 auf der Fallstrecke zwischen der Mischkammer 20 der Mischeinrichtung 14 und der Füllkammer 16 zu Entmischungen und Segregation kommt.

Die Füllkammer 16 weist neben einer Einlassöffnung 22 zur Befüllung der Füllkammer 16 mit zu verpressendem Füllmaterial mindestens eine Auslassöffnung 23 zur Befüllung der Kavitäten des Matrizentisches 7 der Tablettenpresse 3 mit zu verpressendem Füllmaterial auf. In der Füllkammer 16 ist eine Fördereinrichtung 24 angeordnet, die das entmischte zu verpressende Füllmaterial gleichmäßig in die Kavitäten des Matrizentisches 7 der Tablettenpresse 3 füllt. Die Fördereinrichtung 24 wird über eine Antriebseinheit M2 angetrieben.

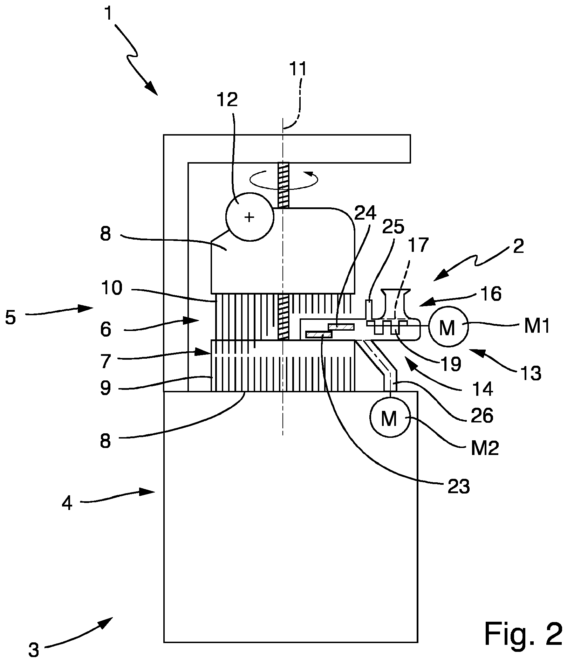

Fig. 2 zeigt eine stark schematisierte Darstellung eines Moduls 1 mit einer erfindungsgemäßen Befülleinheit 2 zur kontinuierlichen Tablettenproduktion mit einer herkömmlichen Tablettenpresse 3. Hierbei weist die Tablettenpresse 3 des Moduls 1 die gleiche Bauweise auf wie die bereits in Fig. 1 erläuterte Tablettenpresse 3.

Die Befülleinheit 2 weist eine Fülleinrichtung 13 auf, umfassend eine Füllkammer 16 mit mindestens einer Einlassöffnung 17 zur Befüllung der Füllkammer 16 mit Ausgangsstoffen und mindestens einer Auslassöffnung 23 zur Füllung der Kavitäten des Matrizentisches 7 der Tablettenpresse 3. Die Füllkammer 16 ist hierbei räumlich in zwei Teile aufgeteilt, nämlich eine Mischeinrichtung 14 und einen die Fördereinrichtung 24 aufweisenden Teil. Die Füllkammer 16 der Fülleinrichtung 13 der Befülleinheit 2 umfasst darüber hinaus eine zumindest teilweise in der Füllkammer 16 angeordnete Mischeinrichtung 14 mit einer Mischvorrichtung 19 zum Mischen der Ausgangsstoffe des zu verpressenden Füllmaterials und mindestens eine Fördereinrichtung 24 zur Befüllung der Kavitäten des Matrizentisches 7 der Tablettenpresse 3 mit zu verpressendem Füllmaterial, wobei die Fördereinrichtung 24 im zweiten Teil der Füllkammer 16 angeordnet ist.

Die Mischeinrichtung 14 der in Fig. 2 dargestellten erfindungsgemäßen Befülleinheit 2 weist eine Mischvorrichtung 19 auf, die für eine optimale Ver- oder Durchmischung der der Mischeinrichtung 14 zugeführten Ausgangsstoffe in zu verpressendes Füllmaterial, das in Kavitäten des Matrizentisches der Tablettenpresse befüllt wird, sorgt. Besonders bevorzugt ist die Mischvorrichtung 19 der Mischeinrichtung 14 als Schneckenmischer, als Bandwendelmischer oder als Schaufelmischer, wie in Fig. 2 gezeigt, ausgebildet. Die bevorzugten Ausführungsformen der Mischvorrichtung 19, nämlich Schneckenmischer, Bandwendelmischer und Schaufelmischer stellen zu jeder Zeit des Gesamtprozesses, insbesondere aber des Mischvorgangs in der Mischeinrichtung 14, eine optimale Vermischung der Ausgangsstoffe des zu verpressenden Füllmaterials sicher. In Fig. 2 wird die Mischvorrichtung 19, insbesondere ein Mischer, von einer Antriebseinheit M1, bevorzugt von einem Motor, ganz besonders bevorzugt von einem Elektromotor, noch bevorzugter von einem Servo- oder Torquemotor, angetrieben. Die in einem zweiten Teil der Füllkammer 16 angeordnete Fördereinrichtung 24 zur Befüllung der Kavitäten des Matrizentisches 7 der Tablettenpresse 3 mit dem optimal ver- bzw. durchmischten Füllmaterial wird über mindestens eine Welle 26 von einer weiteren Antriebseinheit M2, bevorzugt von einem Motor, ganz besonders bevorzugt von einem Elektromotor, noch bevorzugter von einem Servo- oder Torquemotor, angetrieben. Die von mindestens einer Welle 26 einer Antriebseinheit M2 angetriebene Fördereinrichtung 24 zur Befüllung der Kavitäten des Matrizentisches der Tablettenpresse 3 mit zu verpressendem Füllmaterial und die Mischeinrichtung 14 zum Mischen der Ausgangsstoffe sind in Fig. 2 in einer horizontalen Ebene angeordnet. Hierdurch bedingt weist die Füllkammer 16 der Fülleinrichtung 13 der Befülleinheit 2 keine vertikale Transportstrecke auf und das zu verpressende Füllmaterial wird keinem schwerkraftbedingten Transport unterworfen. Somit wird ein Auftreten einer Entmischung und/oder Segregation im Füllmaterial der erfindungsgemäßen Befülleinheit 2 deutlich reduziert oder sogar ganz verhindert.

Das in der erfindungsgemäßen Befülleinheit 2 zu verpressende Füllmaterial wird in der Füllkammer 16 stets optimal ver- bzw. durchmischt, d. h. eine Entmischung und/oder Segregation des zu verpressenden Füllmaterials wird zumindest deutlich reduziert oder ganz vermieden, und in einem Zustand optimaler Ver- bzw. Durchmischung an der zur Befüllung der Kavitäten des Matrizentisches der Tablettenpresse 3 vorgesehenen Fördereinrichtung 24 bereitgestellt. Die erfindungsgemäße Befülleinheit 2 senkt aufgrund ihrer kompakten, kleinen Bauweise die Investitionskosten deutlich und gestattet als zusätzlichen Vorteil einen tablettenpressennahen Einbau in das Modul 1.

Zudem ist die Füllkammer 16 der Fülleinrichtung 13 der Befülleinheit 2 in Fig. 2 in ihrer Gesamtheit zwischen einem die Kavitäten aufweisenden Matrizentisch 7 und einem mindestens einen Stempel 9, 10 aufweisenden Stempelträger 8 angeordnet. Hierdurch wird eine sehr kompakte, kleine Bauweise der Füllkammer 16 erreicht.

Überdies weist die Fülleinrichtung 13 der Befülleinheit 2, insbesondere die Füllkammer 16, eine weitere Einlassöffnung 25 für Ausgangsstoffe, insbesondere aber zur Zuführung von Trenn- und/oder Schmiermittel auf. Trenn- und/oder Schmiermittel, wie beispielsweise Magnesiumstearat, werden fast allen tablettierfähigen Füllmaterialien, insbesondere Pulvermischungen, beigemischt, da sie zumindest in Batch- oder kontinuierlichen Prozessen in einen zumindest geringen Anteil erforderlich sind. Hierbei liegen die Trenn- und/oder Schmiermittel in der Größenordnung von 0,5 Vol.-% bis 1 Vol.-% des Füllmaterials.

Die Trenn- und/oder Schmiermittel sorgen dafür, dass eine Tablette nach einem Pressvorgang wieder zerstörungsfrei aus dem Presswerkzeug der Tablettenpresse 3, insbesondere dem Matrizentisch 7, ausgestoßen werden kann. Die Trenn- und/oder Schmiermittel sollten bevorzugt als letzter Ausgangsstoff für das Füllmaterial zugemischt werden. Zudem sollten die Trenn- und/oder Schmiermittel gleichmäßig im Füllmaterial, insbesondere einer Pulvermischung, verteilt sein. Eine zu intensive, d. h. zu lange Einarbeitung der Trenn- und/oder Schmiermittel sollte verhindert werden, weil die Trenn- und/oder Schmiermittel die Ausgangsstoffe des Füllmaterials, insbesondere einer Pulvermischung, untereinander trennt und daher einer Tablettierung im Wege steht. Bevorzugterweise sollte für eine Zugabe der Trenn- und/oder Schmiermittel daher eine weitere Einlassöffnung 25 im Bereich der Mischeinrichtung 14 vorgesehen werden, so dass für die Trenn- und/oder Schmiermittel eine kurze Verweilzeit im Bereich der Mischeinrichtung 14 bei gleichzeitig optimaler Vermischung mit den Ausgangsstoffen des Füllmaterials sichergestellt wird.

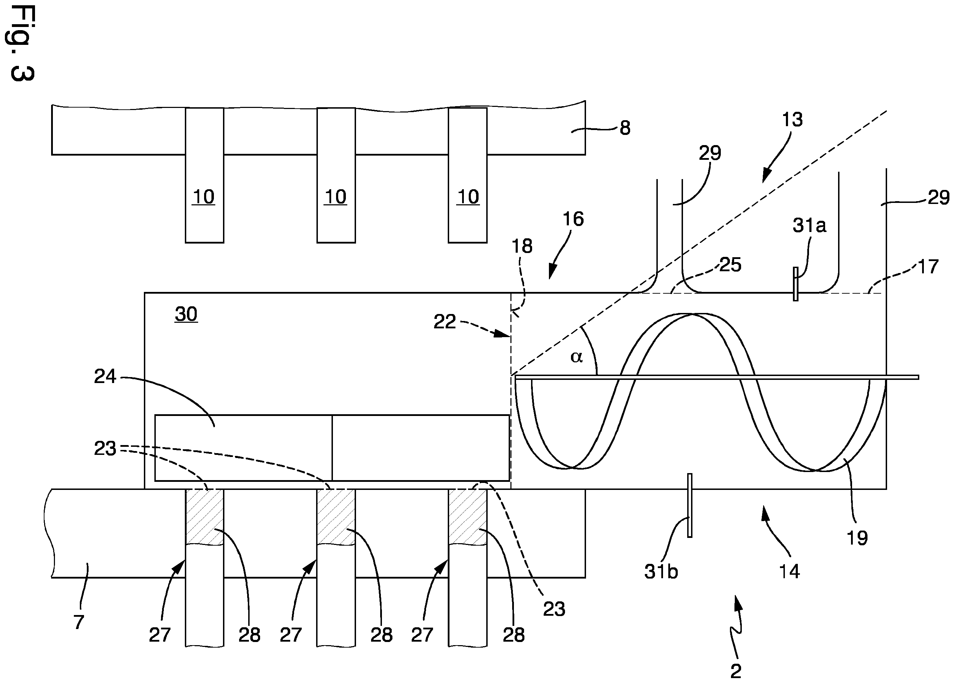

Fig. 3 zeigt eine schematische Darstellung einer zwischen einem Kavitäten 27 aufweisenden Matrizentisch 7 und einem Oberstempel 10 aufweisenden Stempelträger 8 angeordneten erfindungsgemäßen Befülleinheit 2. Die als Fülleinrichtung 13 ausgebildete Befülleinheit 2 weist die Einlassöffnung 17 für die Füllkammer 16 auf, wobei in der Füllkammer 16 eine Mischeinrichtung 14 zum optimalen Ver- bzw. Durchmischen der Ausgangsstoffe des Füllmaterials 28 und eine in einem zweiten Teil der Füllkammer 16 angeordnete Fördereinrichtung 24 zum Befüllen der Kavitäten 27 des Matrizentisches 7 der Tablettenpresse 3 über mindestens eine Ausgangsöffnung 23 umfasst. Zusätzlich weist die Füllkammer 16 eine Einlassöffnung 25 für Trenn- und/oder Schmiermittel auf. Sowohl die Ausgangsstoffe als auch die Trenn- und/oder Schmiermittel werden mittels Leitungen 29, insbesondere Rohr- oder Schlauchleitungen, über die Einlassöffnungen 17 bzw. 25 in von hier nicht gezeigten Vorratsbehältern die Füllkammer 16 transportiert.

Die Mischeinrichtung 14 weist eine Mischvorrichtung 19 auf, die als Bandwendelmischer ausgebildet ist. Dadurch wird eine optimale Ver- bzw. Durchmischung der Ausgangsstoffe des zu verpressenden Füllmaterials 28 erreicht. Die als Bandwendelmischer ausgebildete Mischvorrichtung 19 wird von einer hier nicht dargestellten Antriebseinheit M1 angetrieben. Die in einem zweiten Teil 30 der Füllkammer 16 angeordnete Fördereinrichtung 24 zum Befüllen der Kavitäten 27 des Matrizentisches 7 der Tablettenpresse 3 wird über eine weitere hier nicht dargestellte Antriebseinheit M2 angetrieben. Mischvorrichtung 19 und Fördereinrichtung 24 liegen in Fig. 3 in einer horizontalen Ebene. Die Auslassöffnung 18 der Mischeinrichtung 14 und die Einlassöffnung 22 des zweiten Teils 30 der Füllkammer 16 entsprechen sich hierbei.

In einer ganz besonders bevorzugten, hier nicht dargestellten Ausführungsform der erfindungsgemäßen Befülleinheit 2 werden die Mischvorrichtung 19 und die Fördereinrichtung 24 von einer gemeinsamen Antriebseinheit M, bevorzugt von einem Motor, ganz besonders bevorzugt von einem Elektromotor, noch bevorzugter von einem Servo- oder Torquemotor, angetrieben. Vorteilhafterweise können somit sowohl die Mischvorrichtung 19 der Mischeinrichtung 14 als auch die Fördereinrichtung 24 perfekt aufeinander abgestimmt werden, so dass von der Mischvorrichtung 19 ausschließlich die zur Befüllung der Kavitäten 27 des Matrizentisches 7 der Tablettenpresse 3 durch die Fördereinrichtung 24 optimal durchmischte, notwendige Menge an zu verpressenden Füllmaterial 28 bereitgestellt wird.

Obwohl nicht Teil der beanspruchten Erfindung, besteht zusätzlich die Möglichkeit, dass die die Mischvorrichtung 19 aufweisende Mischeinrichtung 14 einen Winkel α gegenüber dem die Fördereinrichtung 24 umfassenden Teil 30 der Füllkammer 16 aufweist. Der in Fig. 3 positive Winkel α kann auch negativ ausgebildet sein, so dass sich die Mischeinrichtung 14 zum Matrizentisch 7 der Tablettenpresse 3, hin neigt.

Des Weiteren weist die in Fig. 3 gezeigte Fülleinrichtung 13 der Befülleinheit 2, insbesondere die Füllkammer 16, mindestens einen Sensor 31 auf. Der Sensor 31 ist bevorzugt in der Mischeinrichtung 14 angeordnet und als Füllstandssensor 31a und als analytischer Sensor 31b, insbesondere zur Messung der Zusammensetzung und/oder Mischgüte des zu verpressenden Füllmaterials 28, ausgebildet. Der Füllstandssensor 31a ist bevorzugt als optischer Sensor oder Ultraschallsensor ausgebildet, so dass kontinuierlich der Füllstand in der Mischeinrichtung 14 ermittelt wird und somit eine konstante Menge an zu verpressenden Füllmaterial 28 in der Füllkammer 16 vorhanden ist. Mittels des in der Füllkammer 16 angeordneten Füllstandssensors 31a werden der Füllkammer 16 über die Leitungen 29, wie Rohrleitungen oder Schlauchleitungen oder dergleichen, aus nicht gezeigten Vorratsbehältern die notwendigen Mengen des jeweiligen Ausgangsstoffes, nämlich pharmazeutischen Aktiven Wirkstoffen, Hilfsstoffe oder Trenn- und/oder Schmiermittel zugeführt. Ausgangsstoffe können auch bereits vorgemischt zugeführt werden. In einer ebenfalls bevorzugten Ausführungsform ist der mindestens eine Sensor 31 als analytischer Sensor 31b, insbesondere zur Messung der Zusammensetzung und/oder der Mischgüte des zu verpressenden Füllmaterials 28 ausgebildet. Durch einen derartigen Sensor 31b wird stets eine für den Tablettierungsprozess optimale Zusammensetzung und/oder Mischgüte des zu verpressenden Füllmaterials 28 erzielt. Der Einsatz weiterer Sensoren 31, wie bspw. Thermoelementen bei temperaturempfindlichem Füllmaterial, ist denkbar. Der Vorteil einer derartigen kontinuierlichen Messung ist, dass zu jedem Zeitpunkt der Verweilzeit des Füllmaterials 28 in der Füllkammer 16 der erfindungsgemäßen Befülleinheit 2 die Prozessbedingungen erfasst werden und somit direkt Einfluss auf den Prozess genommen werden kann.

Beim erfindungsgemäßen Verfahren zum Befüllen von Kavitäten 27 eines Matrizentisches 7 einer Tablettenpresse 3 mit zu verpressendem Füllmaterial 28, insbesondere einem Pulver, mit einer erfindungsgemäßen Befülleinheit 2, wird zuerst eine Füllkammer 16 über Zuführungsleitungen 29 mit Ausgangsstoffen befüllt. Die Ausgangsstoffe sind pharmazeutisch aktive Wirkstoffe (API), Hilfsstoffe (Exzipienten) und Trenn- und/oder Schmiermittel. Die Ausgangsstoffe werden in der Füllkammer 16 mittels einer Mischvorrichtung 19 zum zu verpressenden Füllmaterial 28 durchmischt, wobei zwischen der Zufuhr der Ausgangsstoffe und dem Befüllen der Kavitäten 27 des Matrizentisches 7 ggf. noch weitere Ausgangsstoffe, insbesondere Trenn- und/oder Schmiermittel, hinzugefügt werden. Nach einer guten Durchmischung des die Ausgangsstoffe und die Trenn- und/oder Schmiermittel enthaltenden Füllmaterials 28 wird dieses anschließend über die Auslassöffnungen 23 in Kavitäten 27 eines Matrizentisches 7 der Tablettenpresse 3 mittels einer Fördereinrichtung 24 befüllt.

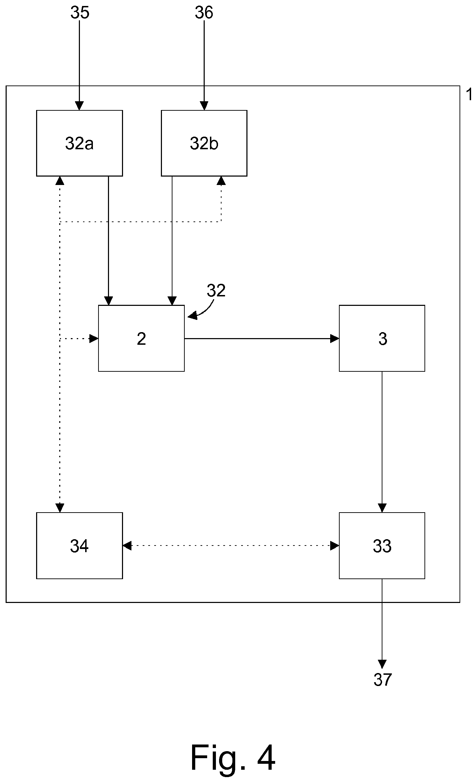

Fig. 4 zeigt ein Modul 1 zum Herstellen von Tabletten umfassend eine Tablettenpresse 3, stromauf der Tablettenpresse 3 positionierte Modulkomponenten 32, einen stromab der Tablettenpresse 3 positionierten Sensor 33, der geeignet ist die in der Tablettenpresse 3 hergestellten Tabletten zu analysieren, und eine Steuereinheit 34.

Eine der Modulkomponenten 32 ist als Befülleinheit 2 ausgebildet. Weitere Modulkomponenten 32 sind insbesondere Dosiervorrichtungen für Wirkstoff, Hilfsstoff oder Schmier- und Trennmittel sowie Trocknungsapparate, wie Wirbelschichtrockner, oder Granulatoren. Im Ausführungsbeispiel sind die weiteren Moduleinheiten 32 als Dosiervorrichtungen 32a für einen Wirkstoff und Dosiervorrichtung 32b für einen Hilfsstoff ausgebildet.

Die Dosiervorrichtung 32a wird über eine Zuführung 35 mit Wirkstoff, die Dosiervorrichtung 32b wird über eine Zuführung 36 mit Hilfsstoff befüllt. Die Dosiervorrichtungen 32a und 32b beschicken die Befülleinheit 2 mit Wirkstoff und Hilfsstoff im entsprechenden für die Herstellung der Tabletten notwendigen Verhältnis.

Wie bereits vorab dargestellt werden die Kavitäten 27 der Tablettenpresse 3 anschließend von der Befülleinheit 2 mit dem zu verpressenden Füllmaterial befüllt. Die Tablettenpresse 3 erzeugt aus dem zu verpressenden Material Tabletten. Diese werden im Nachgang durch den Sensor 33 analysiert. Die Tabletten verlassen im Anschluss daran das Modul 1 über einen Auslass 37 des Moduls 1.

Die Modulkomponenten 32 des Moduls 1 sowie der Sensor 33 sind im Ausführungsbeispiel der Fig. 4 mit der Steuereinheit 33, insbesondere einem Computer oder dgl., zum Versenden und Empfangen von Signalen verbunden. Die Steuereinheit 33 ist mit mindestens einer Modulkomponente 32 verbunden. Die vom Sensor 33 erfassten Messdaten werden als Signale an die Steuereinheit 34 übergeben dort ausgewertet und ein Signal wird an die mindestens eine Modulkomponente 32 übertragen, um mindestens eine stromauf der Tablettenpresse 3 angeordnete Modulkomponente 32 zu steuern und/oder zu regeln.

Der zur Analyse der in der Tablettenpresse 3 hergestellten Tabletten geeignete Sensor 32 dient als Qualitätskontrollinstanz für die Produktqualität der Tabletten. Insbesondere werden Sensoren 32 wie bspw. ein Nahinfrarotspektroskopie (NIR)-Sensor zur Messung einer einheitlichen Vermischung (blend uniformity / content uniformity), oder andere Sensoren zur Messung bspw. der Korngröße der Ausgangsmaterialien, der morphologischen Form, Größe und/oder Bruchfestigkeit der hergestellten Tabletten.

Ein solches Modul 1 weist den Vorteil auf, dass aufgrund der Rückkopplung durch den nach der Tablettenpresse 3 angeordneten Sensor 33 die Vorlaufzeiten deutlich reduziert werden können, sodass ein Wegfallen der zu entsorgenden Tabletten möglich wird.

## Patentansprüche

1. Befülleinheit (2) zum Befüllen von Kavitäten (27) einer Tablettenpresse (3) mit zu verpressendem Füllmaterial (28), insbesondere einem Pulver, mit einer eine Füllkammer (16) aufweisenden Fülleinrichtung (13), wobei die Füllkammer (16) im Einbauzustand zwischen einem die Kavitäten (27) aufweisenden Matrizentisch (7) und einem mindestens einen Stempel (9, 10) aufweisenden Stempelträger (8) angeordnet ist, und wobei die Füllkammer (16) mindestens eine Einlassöffnung (17) zur Befüllung der Füllkammer (16) mit Ausgangsstoffen und mindestens eine Auslassöffnung (23) zur Befüllung der Kavitäten (27) der Tablettenpresse (3) mit zu verpressendem Füllmaterial (28) aufweist, wobei die Füllkammer (16) mindestens eine in der Füllkammer (16) angeordnete Mischeinrichtung (14) zum Mischen der Ausgangsstoffe des zu verpressenden Füllmaterials (28) und mindestens eine Fördereinrichtung (24) zur Befüllung der Kavitäten (27) der Tablettenpresse (3) mit zu verpressendem Füllmaterial (28) aufweist **dadurch gekennzeichnet, dass** die Mischeinrichtung (14) zum Mischen der Ausgangsstoffe und die Fördereinrichtung (24) zur Befüllung der Kavitäten (27) der Tablettenpresse (3) mit zu verpressendem Füllmaterial (28) in einer horizontalen Ebene liegen.

2. Befülleinheit (2) nach Anspruch 1, **dadurch gekennzeichnet, dass** die Fülleinrichtung (13), insbesondere die Füllkammer (16), eine weitere Einlassöffnung (25) zur Zuführung von Trenn- und/oder Schmiermittel aufweist.

3. Befülleinheit (2) nach Anspruch 1 oder 2, **dadurch gekennzeichnet, dass** die Fülleinrichtung (13), insbesondere die Füllkammer (16), mindestens einen Sensor (30) aufweist.

4. Befülleinheit (2) nach Anspruch 3, **dadurch gekennzeichnet, dass** der mindestens eine Sensor (31) als Füllstandssensor (31a) oder als analytischer Sensor (31b), insbesondere zur Messung der Zusammensetzung und/oder Mischgüte des zu verpressenden Füllmaterials (28), ausgebildet ist.

5. Befülleinheit (2) nach einem der vorhergehenden Ansprüche, **dadurch gekennzeichnet, dass** eine Mischvorrichtung (19) in der Mischeinrichtung (14) angeordnet ist.

6. Befülleinheit (2) nach Anspruch 5, **dadurch gekennzeichnet, dass** die Mischvorrichtung (19) der Mischeinrichtung (14) als Schneckenmischer, als Bandwendelmischer oder als Schaufelmischer ausgebildet ist.

7. Befülleinheit (2) nach Anspruch 5 oder 6, **dadurch gekennzeichnet, dass** die Mischvorrichtung (19) von einer Antriebseinheit (M1), bevorzugt von einem Motor, ganz besonders bevorzugt von einem Elektromotor, noch bevorzugter von einem Servo- oder Torquemotor, angetrieben wird oder antreibbar ist.

8. Befülleinheit (2) nach einem der vorhergehenden Ansprüche, **dadurch gekennzeichnet, dass** die Fördereinrichtung (24) von einer weiteren Antriebseinheit (M2), bevorzugt von einem Motor, ganz besonders bevorzugt von einem Elektromotor, noch bevorzugter von einem Servo- oder Torquemotor, angetrieben wird oder antreibbar ist.

9. Befülleinheit (2) nach einem der Ansprüche 5 bis 7, **dadurch gekennzeichnet, dass** die Mischvorrichtung (19) und die Fördereinrichtung (24) von einer gemeinsamen Antriebseinheit (M), bevorzugt von einem Motor, ganz besonders bevorzugt von einem Elektromotor, noch bevorzugter von einem Servo- oder Torquemotor, angetrieben werden oder antreibbar sind.

10. Befülleinheit (2) nach einem der vorhergehenden Ansprüche, **dadurch gekennzeichnet, dass** die mindestens eine Fördereinrichtung (24) zur Befüllung der Kavitäten (27) der Tablettenpresse (3) mit zu verpressendem Füllmaterial (28) und die mindestens eine Mischeinrichtung (14) zum Mischen der Ausgangsstoffe als bauliche Einheit ausgebildet sind.

11. Verfahren zum Befüllen von Kavitäten (27) einer Tablettenpresse (3) mit zu verpressendem Füllmaterial (28), insbesondere einem Pulver, mit einer Befülleinheit (2) gemäß einem der Ansprüche 5 bis 10, **dadurch gekennzeichnet, dass** zuerst eine Füllkammer (16) mit Ausgangsstoffen befüllt wird, die Ausgangsstoffe mittels einer Mischvorrichtung (19) zum zu verpressenden Füllmaterial (28) durchmischt werden und anschließend Kavitäten (27) eines Matrizentisches (7) der Tablettenpresse (3) mittels einer Fördereinrichtung (24) mit dem zu verpressenden Füllmaterial (28) befüllt werden.

12. Verfahren nach Anspruch 11, **dadurch gekennzeichnet, dass** mit und/oder nach der Zufuhr der Ausgangsstoffe in die Füllkammer (16) und vor dem Befüllen der Kavitäten (28) des Matrizentisches (7) die Trenn- und/oder Schmiermittel zudosiert werden.

13. Verfahren nach Anspruch 11 oder 12, **dadurch gekennzeichnet, dass** die in der Füllkammer (16) angeordneten Sensoren (30) kontinuierlich messen.

14. Modul (1) zum Herstellen von Tabletten umfassend eine Tablettenpresse (3), einen stromab der Tablettenpresse (3) positionierten Sensor (33), der geeignet ist die in der Tablettenpresse (3) hergestellten Tabletten zu analysieren, und eine Steuereinheit (34), **dadurch gekennzeichnet, dass** das Modul (1) mindestens eine stromauf der Tablettenpresse (3) angeordnete Modulkomponente (32) aufweist, wobei eine Modulkomponente (32) als Befülleinheit (2) gemäß einem der Ansprüche 1 bis 10 ausgebildet ist, die Steuereinheit (34) zum Versenden und Empfangen von Signalen zumindest mit einer Modulkomponente (32) und dem Sensor (33) verbunden ist und die Steuereinheit (34) mittels der vom Sensor (32) erhaltenen Signale geeignet ist, mindestens eine stromauf der Tablettenpresse (3) angeordnete Modulkomponente (32) zu steuern und/oder zu regeln.

## Claims

1. Filling unit (2) for filling cavities (27) in a tablet press (3) with a feedstock (28) to be pressed, particularly a powder, having a filling assembly (13) comprising a fill chamber (16), wherein the fill chamber (16) is arranged in an installed condition between a die (7) containing the cavities (27) and a punch support (8) comprising at least one punch (9, 10), and wherein the fill chamber (16) has at least one inlet opening (17) for filling the fill chamber (16) with raw materials and at least one outlet opening (23) for filling the cavities (27) of the tablet press (3) with feedstock (28) to be pressed, wherein the fill chamber (16) comprises at least one mixing unit (14) arranged in the fill chamber (16), for mixing the raw material of the feedstock (28) to be pressed and at least one delivery unit (24) for filling the cavities (27) of the tablet press (3) with feedstock (28) to be pressed, **characterized in that** the mixing unit (14) for mixing the raw materials and the delivery unit (24) for filling the cavities (27) of the tablet press (3) with feedstock (28) to be pressed lie in a horizontal plane.

2. Filling unit (2) according to claim 1, **characterized in that** the filling assembly (13), in particular the fill chamber (16), has a further inlet opening (25) for the supply of separating agents and/or lubricants.

3. Filling unit (2) according to claim 1 or 2, **characterized in that** the filling assembly (13), in particular the fill chamber (16), has at least one sensor (30).

4. Filling unit (2) according to claim 3, **characterized in that** the at least one sensor (31) is designed as a fill level sensor (31a) or as an analytical sensor (31b), in particular for measuring the composition and/or mixing quality of the feedstock (28) to be pressed.

5. Filling unit (2) according to any one of the preceding claims, **characterized in that** the mixer (19) is arranged in the one mixing unit (14).

6. Filling unit (2) according to claim 5, **characterized in that** the mixer (19) of the mixing unit (14) is designed as a screw mixer, as a ribbon blender or as a paddle mixer.

7. Filling unit (2) according to claim 5 or claim 6, **characterized in that** the mixer (19) is to be or is driven or drivable by a drive unit (M1), preferably by a motor, quite particularly preferably by an electric motor, more preferably by a servo- or torque motor.

8. Filling unit (2) according to any one of the preceding claims, **characterized in that** the delivery unit (24) is to be or is driven or drivable by a further drive unit (M2), preferably by a motor, quite particularly preferably by an electric motor, more preferably by a servo- or torque motor.

9. Filling unit (2) according to any one of the claims 5 to 7, **characterized in that** the mixer (19) and the delivery unit (24) are to be or are driven or drivable by a common drive unit (M), preferably by a motor, quite particularly preferably by an electric motor, more preferably by a servo- or torque motor.

10. Filling unit (2) according to any one of the preceding claims, **characterized in that** at least one delivery unit (24) for filling the cavities (27) of the tablet press (3) with feedstock (28) to be pressed and the at least one mixing unit (14) for mixing the raw materials are designed as a structural unit.

11. Method for filling cavities (27) in a tablet press (3) with a feedstock (28) to be pressed, in particular a powder, with a filling unit (2) according to any one of claims 5 to 10, **characterized in that** first a fill chamber (16) is filled with raw materials, the raw materials are mixed by means of a mixer (19) into feedstock (28) to be pressed and then cavities (27) of a die table (7) of the tablet press (3) are filled by means of a delivery unit (24) with the feedstock (28) to be pressed.

12. Method according to claim 11, **characterized in that** the separating agents and/or lubricants are added with and/or after supply of the raw materials in the fill chamber (16) and prior to filling of the cavities (28) of the die table (7).

13. Method according to claim 11 or 12, **characterized in that** sensors (30) arranged in the fill chamber (16) are continuously measuring.

14. Module (1) for producing tablets comprising a tablet press (3), a sensor (33) positioned downstream of the tablet press (3), suitable for analyzing the tablets produced in the tablet press (3), and a control unit (34), **characterized in that** the module (1) has at least one module component (32) arranged upstream of the tablet press (3), wherein a module component (32) is designed as a filling unit (2) according to any one of claims 1 to 10, the control unit (34) for sending and receiving signals is connected at least with a module component (32) and the sensor (33), and the control unit (34) is suitable by means of the signals received from the sensor (32), of controlling and/or regulating at least one module component (32) arranged upstream of the tablet press (3).

## Revendications

1. Unité de remplissage (2) pour le remplissage de cavités (27) d'une presse à comprimés (3) avec du matériau de remplissage (28) à presser, en particulier une poudre, avec un dispositif de remplissage (13) présentant une chambre de remplissage (16), dans laquelle la chambre de remplissage (16) est agencée dans l'état d'installation entre une table de matrice (7) présentant les cavités (27) et un support de poinçon (8) présentant au moins un poinçon (9, 10), et dans laquelle la chambre de remplissage (16) présente au moins une ouverture d'entrée (17) pour le remplissage de la chambre de remplissage (16) avec des substances de départ et au moins une ouverture de sortie (23) pour le remplissage des cavités (27) de la presse à comprimés (3) avec du matériau de remplissage (28) à presser, dans laquelle la chambre de remplissage (16) présente au moins un dispositif de mélange (14) agencé dans la chambre de remplissage (16) pour le mélange des substances de départ du matériau de remplissage (28) à presser et au moins un dispositif de transport (24) pour le remplissage des cavités (27) de la presse à comprimés (3) avec du matériau de remplissage (28) à presser, **caractérisée en ce que** le dispositif de mélange (14) pour le mélange des substances de départ et le dispositif de transport (24) pour le remplissage des cavités (27) de la presse à comprimés (3) avec du matériau de remplissage (28) à presser se trouvent dans un plan horizontal.

2. Unité de remplissage (2) selon la revendication 1, **caractérisée en ce que** le dispositif de remplissage (13), en particulier la chambre de remplissage (16), présente une autre ouverture d'entrée (25) pour la fourniture d'agent de séparation et/ou de lubrification.

3. Unité de remplissage (2) selon la revendication 1 ou 2, **caractérisée en ce que** le dispositif de remplissage (13), en particulier la chambre de remplissage (16), présente au moins un capteur (30).

4. Unité de remplissage (2) selon la revendication 3, **caractérisée en ce que** l'au moins un capteur (31) est réalisé en tant que capteur de niveau de remplissage (31a) ou en tant que capteur analytique (31b), en particulier pour la mesure de la composition et/ou de l'enrobé du matériau de remplissage (28) à presser.

5. Unité de remplissage (2) selon l'une quelconque des revendications précédentes, **caractérisée en ce qu'**un dispositif de mélange (19) est agencé dans le système de mélange (14).

6. Unité de remplissage (2) selon la revendication 5, **caractérisée en ce que** le dispositif de mélange (19) du système de mélange (14) est réalisé en tant que mélangeur à vis, en tant que mélangeur à ruban hélicoïdal ou en tant que mélangeur à palettes.

7. Unité de remplissage (2) selon la revendication 5 ou 6, **caractérisée en ce que** le dispositif de mélange (19) est entraîné ou peut être entraîné par une unité d'entraînement (M1), de préférence par un moteur, tout particulièrement de préférence par un moteur électrique, encore plus préférentiellement par un servomoteur ou moteur couple.

8. Unité de remplissage (2) selon l'une quelconque des revendications précédentes, **caractérisée en ce que** le dispositif de transport (24) est entraîné ou peut être entraîné par une autre unité d'entraînement (M2), de préférence par un moteur, tout particulièrement de préférence par un moteur électrique, encore plus préférentiellement par un servomoteur ou moteur couple.

9. Unité de remplissage (2) selon l'une quelconque des revendications 5 à 7, **caractérisée en ce que** le dispositif de mélange (19) et le système de transport (24) sont entraînés ou peuvent être entraînés par une unité d'entraînement (M) commune, de préférence par un moteur, tout particulièrement de préférence par un moteur électrique, encore plus préférentiellement par un servomoteur ou moteur couple.

10. Unité de remplissage (2) selon l'une quelconque des revendications précédentes, **caractérisée en ce que** l'au moins un système de transport (24) pour le remplissage des cavités (27) de la presse à comprimés (3) avec du matériau de remplissage (28) à presser et l'au moins un système de mélange (14) pour le mélange des substances de départ sont réalisés en tant qu'unité structurelle.

11. Procédé de remplissage de cavités (27) d'une presse à comprimés (3) avec du matériau de remplissage (28) à presser, en particulier une poudre, avec une unité de remplissage (2) selon l'une quelconque des revendications 5 à 10, **caractérisé en ce que** tout d'abord une chambre de remplissage (16) est remplie de substances de départ, lesquelles substances de départ sont mélangées au moyen d'un dispositif de mélange (19) pour former un matériau de remplissage (28) à presser et ensuite des cavités (27) d'une table de matrice (7) de la presse à comprimés (3) sont remplies au moyen d'un système de transport (24) avec le matériau de remplissage (28) à presser.

12. Procédé selon la revendication 11, **caractérisée en ce qu'**avec et/ou après la fourniture des substances de départ dans la chambre de remplissage (16) et avant le remplissage des cavités (28) de la table de matrice (7) les agents de séparation et/ou de lubrification sont ajoutés de manière dosée.

13. Procédé selon la revendication 11 ou 12, **caractérisée en ce que** les capteurs (30) agencés dans la chambre de remplissage (16) mesurent en continu.

14. Module (1) pour la fabrication de comprimés comprenant une presse à comprimés (3), un capteur (33) positionné en aval de la presse à comprimés (3) qui est approprié afin d'analyser les comprimés fabriqués dans la presse à comprimés (3), et une unité de commande (34), **caractérisé en ce que** le module (1) présente au moins un composant de module (32) agencé en amont de la presse à comprimés (3), dans lequel un composant de module (32) est réalisé en tant qu'unité de remplissage (2) selon l'une quelconque des revendications 1 à 10, l'unité de commande (34) est reliée pour l'envoi et la réception de signaux au moins à un composant de module (32) et au capteur (33) et l'unité de commande (34) est appropriée au moyen des signaux reçus par le capteur (32) afin de commander et/ou réguler au moins un composant de module (32) agencé en amont de la presse à comprimés (3).
